# EUROPÄISCHE PATENTSCHRIFT

(11) **EP 1 050 184 B1**
(45) Veröffentlichungstag und Bekanntmachung des Hinweises auf die Patenterteilung: **13.10.2004**
(21) Anmeldenummer: 99906028.8
(22) Anmeldetag: 07.01.1999
(51) Int. Cl.: H04Q 11/04, H04L 12/46

(54) **VERFAHREN ZUR ABBILDUNG EINES IN EINEM VERBINDUNGSORIENTIERTEN KOMMUNIKATIONSNETZ VERFÜGBAREN DIENSTGÜTEMERKMALS IN EIN VERBINDUNGSLOSES KOMMUNIKATIONSNETZ UND UMGEKEHRT**
METHOD FOR MAPPING A SERVICE ATTRIBUTE PERTAINING TO A CONNECTION ORIENTED COMMUNICATIONS NETWORK IN A CONNECTIONLESS COMMUNICATIONS NETWORK AND VICE VERSA
PROCEDE DE REPRESENTATION DANS UN RESEAU DE COMMUNICATION SANS CONNEXIONS D'UNE CARACTERISTIQUE DE QUALITE DE SERVICE DISPONIBLE DANS UN RESEAU DE COMMUNICATION ORIENTE CONNEXION, ET INVERSEMENT

(30) Priorität: 19.01.1998 DE 19801773
(43) Veröffentlichungstag der Anmeldung: 08.11.2000
(73) Patentinhaber: SIEMENS AKTIENGESELLSCHAFT, 80333 München (DE)
(72) Erfinder: SOKOL, Joachim, D-82008 Unterhaching (DE)
(86) Internationale Anmeldenummer: PCT/DE1999/000014
(87) Internationale Veröffentlichungsnummer: WO 1999/037116

(56) Entgegenhaltungen:
- EP-A- 0 479 478
- WO-A-96/35988

## Beschreibung

Die Erfindung betrifft ein Verfahren zur Abbildung eines in einem verbindungsorientierten Kommunikationsnetz verfügbaren Dienstgütemerkmals, das einen hochprioren Datenstrom von einem niederprioren Datenstrom unterscheidet, in ein verbindungsloses Kommunikationsnetz und umgekehrt.

Ein Local Area Network, im folgenden als LAN bezeichnet, ist aus [1] bekannt. Ein weiteres LAN ist aus Dokument EP 0 479 478 bekannt. In einem LAN werden Daten durch den Transport von Datenpaketen (Daten begrenzter Länge) übertragen. Die Datenpakete enthalten dabei Ursprungsadresse und Zieladresse und werden spontan, d.h. ohne einen vorherigen Verbindungsaufbau, versandt (verbindungslose Kommunikation).

Ein Dienstgütemerkmal bezeichnet eine Option aus mehreren möglichen Optionen, die für ein gegebenes Kommunikationsnetz kennzeichnend sind. Beispielsweise ist darunter eine Betriebsweise oder ein zusätzlicher Dienst des Kommunikationsnetzes zu verstehen. Ein Dienstgütemerkmal in dem ATM-Netz ist die Kennzeichnung zur Übertragung eines hochprioren Datenstroms, also eines Datenstroms, der nach bestimmten Kriterien (siehe unten) eine sichere Übertragung (siehe unten) erfordert von einem niederprioren Datenstrom, der entsprechend keine sichere Übertragung erfordert.

Unter einer transparenten Übertragung bzw. einem transparenten Datenstrom ist eine Übertragung oder ein Datenstrom zu verstehen, dessen Inhalt ohne eine Analyse übertragen wird. Erst im Zielsystem erfolgt die Umsetzung des Inhalts in Steuerinformation und Daten. Dies entspricht der dem Fachmann geläufigen Betrachtung des OSI-Schichtenmodells gemäß der ISO-Definition (ISO = International Standardisation Organisation). Eine schichtenweise Betrachtung ist im Rahmen der Kommunikationstechnik auch jenseits des OSI-Schichtenmodells zweckmäßig und üblich.

Aus [2] ist ein ATM-Netz (ATM = Asynchronous Transfer Mode) bekannt. Das ATM-Netz arbeitet verbindungsorientiert, d.h. die Datenübertragung besteht aus einem Verbindungsaufbau, einer Informationsübertragung und einem Verbindungsabbau. Weitere Details können aus [2] und zahlreichen anderen Quellen sowie den entsprechenden Standards entnommen werden.

Es ist bekannt, ein LAN, z.B. Ethernet oder Token Ring an ein ATM-Netz anzuschließen. Dabei sind vorgebbare Veränderungen an der Definition des LAN vorzunehmen, es wird in diesem Zusammenhang von einer LAN-Emulation, weiterhin als LANE bezeichnet, gesprochen. Für weitergehende Informationen sei auf die entsprechende LANE-Definition des "ATM-Forums" verwiesen (siehe[3]).

Die in [3] beschriebene LANE hat den Nachteil, daß keine Nutzung der in dem ATM-Netz definierten Dienstgütemerkmale (engl.: Quality of Service, QoS) möglich ist. Da solche Dienstgütemerkmale in den angeschlossenen LANs, z.B. dem Ethernet, ebenfalls nicht verfügbar sind, besteht keine Möglichkeit der unterschiedlichen Behandlung von Datenströmen, also eine Unterscheidung zwischen niederprioren und hochprioren Datenströmen, wie dies in dem ATM-Netz üblich ist.

Nun ist es aber möglich, die bestehende LANE oder auch das herkömmliche LAN zu erweitern dahingehend, daß innerhalb des LAN eine solche Unterscheidung in niederpriore und hochpriore Datenströme getroffen werden kann. Eine solche Erweiterung kann der Patentanmeldung PCT/DE97/00404 vom 04.03.1997 entnommen werden und wird weiter unten nochmals zusammengefaßt. Ein derart erweitertes LAN wird nachfolgend als LANE2 bezeichnet.

Bisher gehen die Dienstgütemerkmale jedoch an jedem Übergang zwischen LANE2 und ATM-Netz verloren.

Die **Aufgabe** der Erfindung besteht darin, ein in einem verbindungsorientierten Kommunikationsnetz verfügbares Dienstgütemerkmal, nämlich die Unterscheidung zwischen einem hochprioren und einem niederprioren Datenstrom, in ein verbindungsloses Kommunikationsnetz abzubilden und umgekehrt.

Diese Aufgabe wird gemäß den Merkmalen des Patentanspruchs 1 gelöst.

Die Erfindung bildet ein in einem verbindungsorientierten Kommunikationsnetz verfügbares Dienstgütemerkmal in ein verbindungsloses Kommunikationsnetz ab. Beispiel für ein verbindungsorientiertes Kommunikationsnetz ist das oben erwähnte ATM-Netz und für ein verbindungsloses Kommunikationsnetz das ebenfalls oben beschriebene LANE mit einer entsprechenden Erweiterung.

Ein erster niederpriorer Datenstrom oder ein erster hochpriorer Datenstrom wird aus dem verbindungsorientierten Kommunikationsnetz transparent in das verbindungslose Kommunikationsnetz übertragen. Ein zweiter niederpriorer Datenstrom wird aus dem verbindungslosen Kommunikationsnetz in das verbindungsorientierte Kommunikationsnetz übertragen, wobei eine Adressumsetzung einer Adresse des verbindungslosen Kommunikationsnetzes in eine Adresse des verbindungsorientierten Kommunikationsnetzes durchgeführt wird. Ein zweiter hochpriorer Datenstrom wird aus dem verbindungslosen Kommunikationsnetz in das verbindungsorientierte Kommunikationsnetz abgebildet, indem, falls es sich bei dem zweiten hochprioren Datenstrom um ein Signalisierungspaket handelt, eine Umsetzung einer Signalisierungsinformation des Signalisierungspakets aus dem verbindungslosen Kommunikationsnetz in eine in dem verbindungsorientierten Kommunikationsnetz verfügbare Signalisierungsinformation durchgeführt wird, oder, falls es sich bei dem zweiten hochprioren Datenstrom um ein Informationspaket handelt, eine transparente Übertragung in das verbindungsorientierte Kommunikationsnetz durchgeführt wird.

Eine erste Weiterbildung der Erfindung beschreibt die Umsetzung von in dem verbindungslosen Kommunikationsnetz verfügbaren Dienstgüteparametern in das verbindungsorientierte Kommunikationsnetz in folgenden Schritten:
- es wird aus der zur Verfügung stehenden Bandbreite eine geeignete Bandbreite für eine neue Verbindung bestimmt;
- aus der Adresse des verbindungslosen Kommunikationsnetzes wird durch eine Adreßumsetzung eine zugehörige Adresse des verbindungsorientierten Kommunikationsnetzes bestimmt;
- wenn eine geeignete Bandbreite zur Verfügung steht und die Adresse eines zugehörigen Teilnehmers in dem verbindungsorientierten Kommunikationsnetz bekannt ist, wird die neue Verbindung aufgebaut.

Eine andere Weiterbildung besteht darin, daß das verbindungsorientierte Kommunikationsnetz ein ATM-Netz ist und die Adresse des verbindungsorientierten Kommunikationsnetzes eine ATM-Adresse ist.

Eine zusätzliche Weiterbildung besteht darin, daß das verbindungslose Kommunikationsnetz ein LAN ist, wobei die Adresse des verbindungslosen Kommunikationsnetzes eine LAN-Adresse ist. Dieses LAN entspricht der eingangs erwähnten um das Dienstgütemerkmal hochpriorer/niederpriorer Datenstrom erweiterten Variante LANE2.

Eine nächste Weiterbildung besteht in der Ausgestaltung der Adressumsetzung (aus dem LAN in das ATM-Netz). Für eine vorgebbare LAN-Adresse wird eine ATM-Adresse gefunden, indem entweder die ATM-Adresse auf einem LANE-Server oder über speziell aufgebaute Verbindungen zu allen Nachbarknoten verfügbar ist.

Weiterbildungen der Erfindung ergeben sich auch aus den abhängigen Ansprüchen.

Anhand der folgenden Figuren werden Ausführungsbeispiele der Erfindung näher dargestellt.

Es zeigen
- Fig.1: eine Skizze, die die Funktionalität der Abbildung von einem Dienstgütemerkmal aus dem ATM-Netz in das LAN (und zurück) in logische Blöcken darstellt.
- Fig.2: eine Skizze, die drei Anordnungen, die Teil einer Kommunikationsbeziehung sind, in einem Schichtenmodell (nach ISO) zeigt,
- Fig.3: eine Skizze, die verschiedene Protokollformate des Ethernet-Standards und einer Erweiterung gemäß einem RMAC-Konzept darstellt.

### BESCHREIBUNG DER BEKANNTEN ERWEITERUNG DES LAN-STANDARDS ZUR UNTERSCHEIDUNG VON EINEM HOCHPRIOREN UND EINEM NIEDERPRIOREN DATENSTROM (SIEHE PATENTANMELDUNG PCT/DE97/00404):

Nachfolgend wird, wie oben angedeutet, der Inhalt der Patentanmeldung PCT/DE97/00404 vom 04.03.1997 zusammengefaßt.

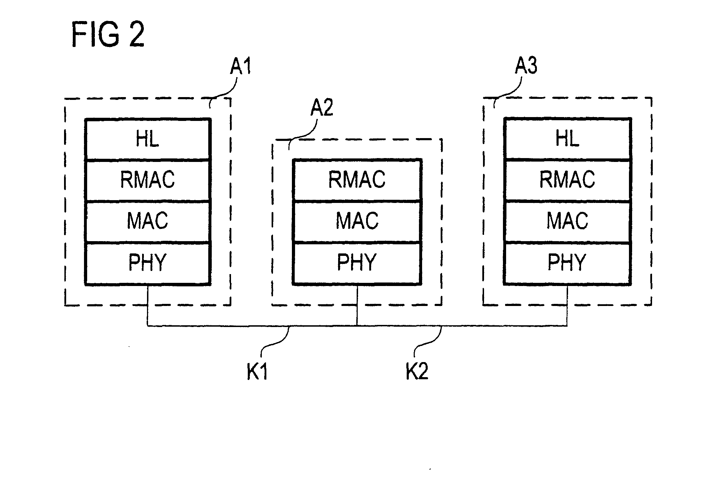

In **Fig.2** sind eine erste Anordnung A1, eine zweite Anordnung A2 und eine dritte Anordnung A3 dargestellt, wobei die erste Anordnung A1 mit der zweiten Anordnung A2 über einen Kanal K1 und die zweite Anordnung A2 mit der dritten Anordnung A3 über einen Kanal K2 verbunden sind.

Sowohl die erste Anordnung A1 als auch die dritte Anordnung A3 stellen Endgeräte, die nach dem Ethernet-Standard arbeiten, dar. Die zweite Anordnung zeigt einen Ethernet-Vermittlungsknoten (Ethernet-Switch). Über die Kanäle K1 und K2 werden Datenpakete (Informationspakete und/oder Signalisierungspakete) verschickt.

Gemäß dem Ethernet-Standard sind in Fig.2 standardisierte Schichten nach ISO (International Standardisation Organisation) für jede Anordnung dargestellt. Die Kopplung der Kanäle K1 und K2 geschieht über eine physikalische Schicht PHY (Bitübertragungsschicht). Über der physikalischen Schicht PHY liegt eine Ethernet-Schicht MAC (Media Access Control), die die Funktionalität des standardisierten Ethernet-Protokolls gewährleistet.

Eine Erweiterung des Ethernet-Standards besteht in einem Einfügen einer Schicht RMAC (=Realtime Media Access Control) zwischen der Ethernet-Schicht MAC und den höheren Schichten HL (Netz- und Transportprotokolle, z.B. TCP/IP (Transport Control Protocol/Internet Protocol) oder UDP/IP (User Datagramm Protocol/Internet Protocol)).

Die zweite Anordnung A2 in Fig.2 ist der Ethernet-Vermittlungsknoten und verfügt über keine höheren Schichten HL, da für eine Vermittlungsfunktionalität diese nicht erforderlich sind.

Die Schicht RMAC leistet u.a. den Dienst, einem Datenpaket eine Prioritätsklasse zuzuordnen, wobei das Datenpaket entsprechend markiert wird und schließlich übertragen wird. Ein Empfänger, z.B. die dritte Anordnung A3 ermittelt die Prioritätsklasse des Datenpakets und überträgt gegebenenfalls das Datenpaket weiter oder stellt die in dem Datenpaket enthaltene Information den höheren Schichten HL transparent zur Verfügung.

Vorzugsweise werden vier Prioritätsklassen unterschieden:
1. Eine erste Prioritätsklasse PK0 eignet sich für verbindungslose Datenübertragung. Das Datenpaket wird ohne Verbindungsaufbau und ohne Garantie für eine erfolgreiche Übertragung (keine Bestätigung) übertragen. Die erste Prioritätsklasse PK0 stellt die niedrigste Priorität dar, die einem Datenpaket zugeordnet werden kann.
2. Eine zweite Prioritätsklasse PK1 entspricht einer verbindungsorientierten Übertragung, bei der eine kontrollierte Verzögerung bei der Übertragung des Datenpakets in einem statistischen Mittel gewährleistet wird, wobei folgende Dienstmerkmale realisiert sind:
   - es wird eine für die Verbindung notwendige Bandbreite, die während des Verbindungsaufbaus bestimmt wird, sichergestellt;
   - eine durchschnittliche Verzögerung bei der Übertragung des Datenpakets, auch bei großer Belastung des Kommunikationsnetzes, ist nicht schlechter als eine Verzögerung eines mit Datenpakets, dem die Prioritätsklasse PK0 zugeordnet worden ist;
   - eine größtmögliche Verspätung des Datenpakets (mit der Prioritätsklasse PK1) ist geringer als die Verspätung eines Datenpaket der Prioritätsklasse PK0;
   - eine Verlustrate bei der Übertragung von Datenpaketen der Prioritätsklasse PK1 ist unerheblich, solange an bei dem Verbindungsaufbau vereinbarten Bedingungen für die Kommunikationsverbindung festgehalten wird.
3. Eine dritte Prioritätsklasse PK2 betrifft eine verbindungsorientierte Übertragung. Dafür sind folgende Dienstmerkmale vorgesehen:
   - die meisten Datenpakete werden vollständig übertragen;
   - für die meisten Datenpakete wird eine durch eine vorgebbare Schwelle festgelegte maximale Verzögerungszeit nicht überschritten.
4. Schließlich entspricht eine vierte Prioritätsklasse PK3, die ebenfalls für verbindungsorientierte Übertragung vorgesehen ist, der höchsten Priorität, die einem Datenpaket zugeordnet werden kann. Es soll auf jeden Fall eine sichere Übertragung gewährleistet werden, wobei folgende Dienstmerkmale vorgesehen sind:
   - die während des Verbindungsaufbaus ausgehandelte Bandbreite wird für die Übertragung bereitgestellt;
   - es werden vorgebbare maximale Verzögerungszeiten garantiert;
   - es treten keine Verluste von Datenpaketen aufgrund von Überläufen in Pufferspeichern auf.
   Somit kann, solange das Kommunikationsnetz nicht zusammenbricht, bei Zuordnung eine Datenpakets zur Prioritätsklasse PK3 von einer sicheren und schnellstmöglichen Übertragung ausgegangen werden.

Vorliegend werden im Hinblick auf die Anbindung des LANs an das ATM-Netz nur zwei Prioritätsklassen unterschieden: Daten mit hoher Priorität als hochpriorer Datenstrom und Daten mit niedriger Priorität als niederpriorer Datenstrom.

Entsprechend der oben beschriebenen Zuordnung eine Prioritätsklasse zu einem Datenpaket wird auch eine Kennzeichnung des Datenpakets vorgenommen, wobei dabei das im Ethernet-Standard festgelegte Format mit einer entsprechenden Erweiterung für das RMAC-Konzept versehen wird.

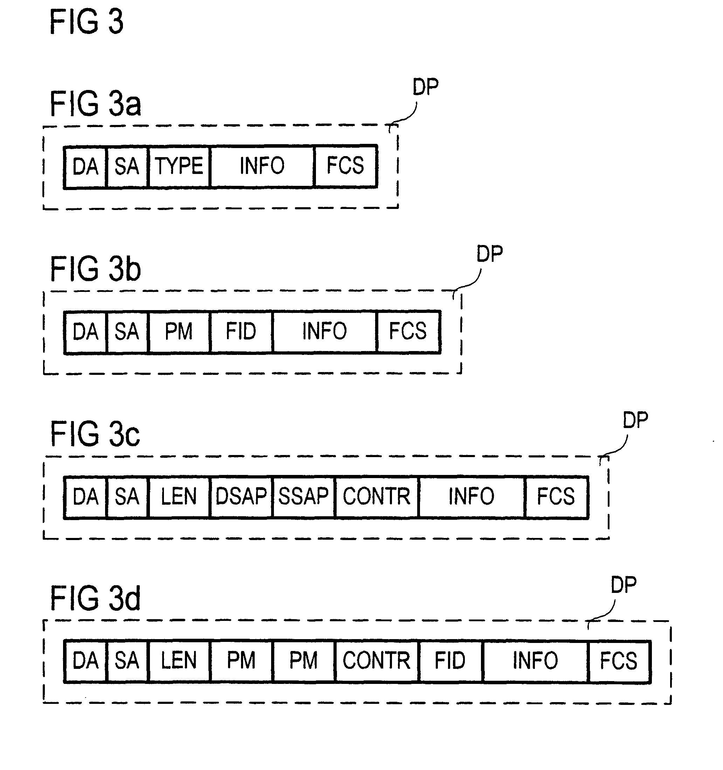

In **Fig.3** ist das Datenpaket in unterschiedlichen Formaten und mit verschiedenen Inhalten (und Funktionalitäten) dargestellt.

Fig.3a zeigt ein im Ethernet-Standard definiertes Datenpaket mit den Feldern:
- Zieladreßfeld DA (Destination Address);
- Senderadreßfeld SA (Source Address);
- Feld TYPE:
   Das Feld TYPE enthält eine ganze Zahl, vorzugsweise mit einer Länge von zwei Oktetten. Je nach Wert, wird die
   Bedeutung des Feldes TYPE unterschiedlich interpretiert:
      -- TYPE < 1500: Interpretation als Längenfeld (Datenpaket entspricht einem LLC-Format (Logical Link Control));
      -- TYPE ≥ 1500: Interpretation als Typangabe (Code für das Netzwerkprotokoll);
- ein Feld INFO enthält weitere Dienstmerkmale oder Daten bzw. Signalisierungsinformation, die normalerweise transparent an die höheren Schichten HL übertragen werden;
- ein Feld FCS enthält eine Prüfsumme zur Fehlerkorrektur.

Das LLC-Format ist in Fig.3c dargestellt. Zusätzlich zu den oben dargestellten Felder sind hier folgende Felder vorhanden:
- ein Feld LEN entspricht dem Längenfeld (das Feld TYPE aus Fig.3a enthält einen Wert, der kleiner als 1500 ist, somit migriert das Feld TYPE zu dem Feld LEN);
- ein Feld DSAP (Destination Service Access Point) stellt einen Dienstzugangspunkt den Empfängers dar;
- ein Feld SSAP (Source Service Access Point) enthält einen Dienstzugangspunkt des Senders;
- ein Feld CONTROL umfaßt ein oder zwei Oktette und wird benutzt für spezielle Kommando- und Antwort-Funktionen, wobei eine Sequenznummer die Reihenfolge der Nachrichten sicherstellt.

Die Erweiterung des Ethernet-Standard hinsichtlich des RMAC-Konzeptes wird beispielhaft in Fig.3b gezeigt. Dazu wird in das Feld TYPE eine Prioritätsmarke PM eingetragen, die eindeutig die Prioritätsklasse PKi (i={0,1,2,3}) identifiziert.

Ein Datenpaket mit der niedrigsten Prioritätsklasse PK0 wird vorzugsweise nicht mit einer Prioritätsmarke versehen. Es wird unverändert gemäß dem Ethernet-Standard übertragen.

Weiterhin ist in Fig.3b ein Feld FID (Flußidentifikator) dargestellt. Dieser Flußidentifikator kennzeichnet die sendende Anordnung eindeutig. Daher kann der Empfänger, dort vorzugsweise die höheren Schichten HL, dieses mit dem Feld FID versehenen Datenpakets einen eindeutigen Bezug zu den sendenden höheren Schichten HL herstellen.

Das Datenpaket kann ein Informationspaket oder ein Signalisierungspaket sein.

Fig.3c und Fig.3d zeigen solche Signalisierungspakete, wobei in Fig.3d die Erweiterung im Sinne des RMAC-Konzepts zu dem Ethernet-Standard in Fig.3c dargestellt ist. Die Prioritätsmarke PM ist in dem Feld DSAP enthalten. Bei der Prioritätsmarke PM handelt es sich auch um DSAP bzw. SSAP-Information mit zusätzlicher Prioritätsinformation.

Die Bedeutungen der Bezeichnungen der einzelnen Felder von Fig.3d sind aus den obigen Ausführungen ersichtlich.

### AUSFÜHRUNGSBEISPIEL(E) DER ERFINDUNG:

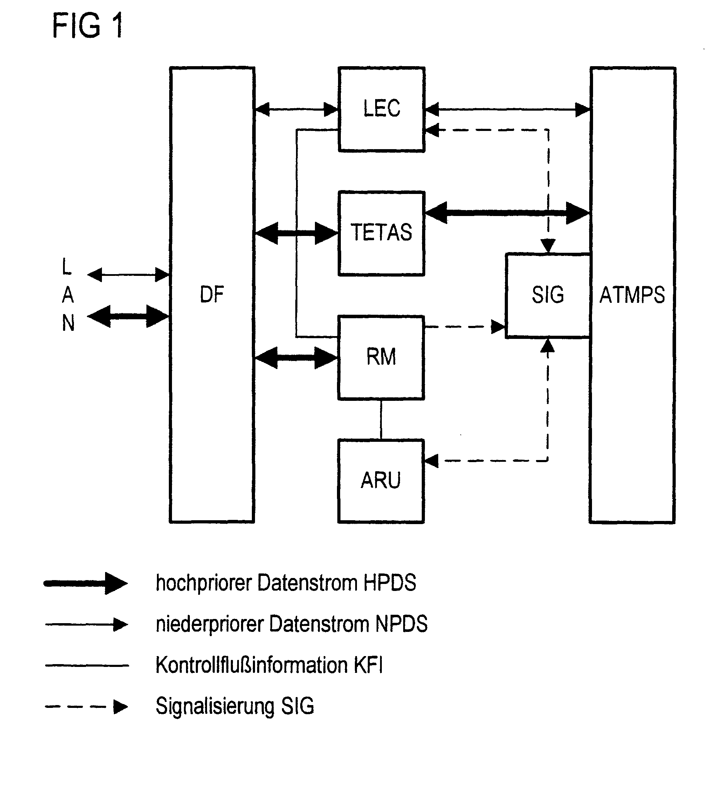

Der im Ethernet oder Token Ring (LAN) vorhandene Datenstrom soll auch beim Übergang in das ATM-Netz entsprechend der vorgebbaren Dienstgütemerkmale behandelt werden. In **Fig.1** ist eine allgemeine Architektur zur Abbildung von Dienstgütemerkmalen eines in oben beschriebenem Sinne (RMAC) erweiterten herkömmlichen LANs in ein ATM-Netz dargestellt. Dabei ist in Fig.1 eine Skizze angegeben, die logische Funktionen in Blöcken vereint, ohne daß aus dieser Darstellung eine Aufteilung von Hardware-Komponenten und/oder Software-Komponenten hervorgeht. Eine solche Aufteilung ist dem jeweiligen konkreten Anwendungsfall überlassen und kann dementsprechend variieren.

Nachfolgend werden die einzelnen Komponenten (Blöcke) in Fig.1 erläutert.

Ein Block DF ("Data Forwarder") unterscheidet zwischen einem hochprioren und einem niederprioren Datenstrom. Handelt es sich um einen niederprioren Datenstrom, so wird eine Weiterbehandlung in einem Block LEC ("LAN Emulation Client") angestoßen (siehe Beschreibung weiter unten). Handelt es sich hingegen um einen hochprioren Datenstrom, wird eine Weiterbehandlung in einem Block TETAS ("Transparent Ethernet to ATM Slot") angestoßen, falls es sich um ein Informationspaket handelt, ansonsten, also bei einem Signalisierungspaket, wird eine Weiterbehandlung in einem Block RM ("Resource Mananger") eingeleitet.

In dem Block RM werden Ressourcen, z.B. die Bandbreite, verwaltet. Ziel ist es, eine faire Vergabe der Ressourcen zu gewährleisten. Dazu werden in dem Block RM die in dem Signalisierungspaket enthaltenen Dienstgüteparameter aus dem LAN, vorzugsweise aus dem RMAC-Protokoll, derart angepaßt, daß in dem ATM-Netz diese Dienstgüteparameter umgesetzt werden können und somit in dem ATM-Netz verfügbar sind.

Ist der Aufbau einer Verbindung (vom LAN ins ATM-Netz) nicht möglich, so wird eine entsprechende Nachricht an das System, das die Verbindung angefordert hat, übermittelt (Fehlerbehandlung).

Ist die Ressource (Kanal, Bandbreite) verfügbar, wird die Verbindung mit den entsprechenden Dienstgüteparametern aufgebaut. Dazu wird eine LAN-Adresse in eine ATM-Adresse umgewandelt, um das Ziel auf ATM-Seite zu finden. Ist die ATM-Adresse lokal nicht verfügbar, so muß diese von dem Block ARU ("Address Resolution Unit") ermittelt werden.

In dem Block LEC werden alle Operation für niederpriore Pakete in Übereinstimmung der LANE-Spezifikation durchgeführt. Dadurch wird Kompatibilität zu der standardisierten LAN-Erweiterung, die ihrerseits, wie eingangs erwähnt, über keine Anpassung an die Dienstgütemerkmale des ATM-Standards aufweist, sichergestellt. Der Block LEC verwaltet eigens Ressourcen, wobei diese selbstverwalteten Ressourcen dem Block RM mitgeteilt werden.

In dem Block TETAS werden transparent Informationspakete von dem LAN ins ATM-Netz und zurück übertragen.

Schließlich findet die Adressumsetung, wie erwähnt, in dem Block ARU statt. Dort wird eine MAC-Adresse (Media Access Control) in eine ATM-Adresse umgewandelt. Die Adressumsetzung erfolgt in zwei Stufen. Zuerst wird auf eine Server-Komponente des LAN zugegriffen, den LAN Emulation Server (LES), um eine standardisierte LANE-Adressauflösung durchzuführen. Wird keine Adressinformation vom LES zurückgeliefert, so wird in einem zweiten Schritt von ATM-Seite, vorzugsweise dort in den Vermittlungsstellen, die korrespondierenden ATM-Adresse angefordert. Hierzu wird die gewünschte MAC-Adresse direkt in das B-HLI-Feld ("Broadband High Layer Information"), dort in das Oktett 6 bis 11 der Setup-Nachricht kodiert (vergleiche [4]). Es wird nur in der Vermittlungsstelle, der die MAC-Adresse bekannt ist, die Verbindung akzeptiert. Alle anderen Vermittlungsstellen lehnen die Verbindung ab.

Ein Block SIG ("Signalisierung") und ein Block ATMPS ("ATM Protocol Stack") kennzeichnen die ATM-Seite, wobei der Block ATMPS eine standardisierte ATM-Schicht einschließlich der AAL-5-Schicht (siehe [5]) umfaßt. Der Block SIG enthält die Signalisierungsprotokolle Q.2931 und SSCOP (vergleiche [6]).

Im Rahmen dieses Dokuments wurden folgende Veröffentlichungen zitiert:
[1] Gerd Sigmund: Grundlagen der Vermittlungstechnik, 2.Auflage, v.Decker, Heidelberg 1992, ISBN 3-7685-4892-9, S.177-185.
[2] Gerd Sigmund: Grundlagen der Vermittlungstechnik, 2.Auflage, v.Decker, Heidelberg 1992, ISBN 3-7685-4892-9, S.420-428.
[3] ATM Forum: LAN Emulation over ATM V1.0, ATM Forum LANE-0021.000, January 1995, insbesondere Kapitel 7 (Seiten 86-96) bzw. Kapitel 8 (Seiten 96-102).
[4] ATM Forum: ATM User-Network Interface, Version 3.1.
[5] ITU-T: I.363 B-ISDN ATM Adaptation Layer (AAL) Specification.
[6] ITU-T: Q.2931 Digital Subscriber Signalling System No.2 - User-Network-Interface (UNI) layer 3 specification for basic call/connection control.

ITU-T: Q.2110 B-ISDN signalling ATM adapation layer - service specific connection oriented protocol (SSCOP).

## Patentansprüche

1. Verfahren zur Abbildung eines in einem verbindungsorientierten Kommunikationsnetz verfügbaren Dienstgütemerkmals, das einen hochprioren Datenstrom oder einen niederprioren Datenstrom kennzeichnet, in ein verbindungsloses Kommunikationsnetz und umgekehrt,
a) bei dem ein erster niederpriorer Datenstrom aus dem verbindungsorientierten Kommunikationsnetz transparent in das verbindungslose Kommunikationsnetz abgebildet wird,
b) bei dem ein erster hochpriorer Datenstrom aus dem verbindungsorientierten Kommunikationsnetz transparent in das verbindungslose Kommunikationsnetz abgebildet wird,
c) bei dem ein zweiter niederpriorer Datenstrom aus dem verbindungslosen Kommunikationsnetz in das verbindungsorientierte Kommunikationsnetz abgebildet wird, wobei eine Adressumsetzung einer Adresse des verbindungslosen Kommunikationsnetzes in eine Adresse des verbindungsorientierten Kommunikationsnetzes durchgeführt wird,
d) bei dem ein zweiter hochpriorer Datenstrom aus dem verbindungslosen Kommunikationsnetz in das verbindungsorientierte Kommunikationsnetz abgebildet wird, indem
falls es sich bei dem zweiten hochprioren Datenstrom um ein Signalisierungspaket handelt, eine Umsetzung einer Signalisierungsinformation des Signalisierungspakets aus dem verbindungslosen Kommunikationsnetz in eine in dem verbindungsorientierten Kommunikationsnetz verfügbaren Signalisierungsinformation durchgeführt wird,
falls es sich bei dem zweiten hochprioren Datenstrom um ein Informationspaket handelt, eine transparente Übertragung in das verbindungsorientierte Kommunikationsnetz durchgeführt wird.

2. Verfahren nach Anspruch 1,
bei dem die in dem verbindungslosen Kommunikationsnetz verfügbaren Dienstgüteparameter aus dem Signalisierungspaket in das verbindungsorientierte Kommunikationsnetz umgesetzt werden in folgenden Schritten:
a) aus einer zur Verfügung stehenden gesamten Bandbreite wird eine geeignete Bandbreite für eine neue Verbindung bestimmt;
b) aus der Adresse des verbindungslosen Kommunikationsnetzes wird durch eine Adressumsetzung die geeignete Adresse des verbindungsorientierten Kommunikationsnetzes bestimmt;
c) steht eine geeignete Bandbreite zur Verfügung und ist die Adresse in dem verbindungsorientierten Kommunikationsnetz bekannt ist, wird die neue Verbindung aufgebaut;
d) steht keine geeignete Bandbreite zur Verfügung oder ist die Adresse in dem verbindungsorientierten Kommunikationsnetz nicht bekannt, so wird eine vorgebbare Fehlermeldung dargestellt.

3. Verfahren nach einem der vorhergehenden Ansprüche, bei dem das verbindungsorientierte Kommunikationsnetz ein ATM-Netz und die Adresse des verbindungsorientierten Kommunikationsnetzes eine ATM-Adresse sind.

4. Verfahren nach einem der vorhergehenden Ansprüche, bei dem das verbindungslose Kommunikationsnetz ein Local Area Network (LAN), das um das Dienstgütemerkmal, einen hochprioren und einen niederprioren Datenstrom unterscheiden zu können, erweitert wird, und die Adresse des verbindungslosen Kommunikationsnetzes eine LAN-Adresse sind.

5. Verfahren nach Anspruch 3 und 4,
bei dem die Adressumsetzung in folgenden Schritten durchgeführt wird:
a) für die LAN-Adresse wird die ATM-Adresse von einem LAN-Server ermittelt, oder,
b) falls lokal die ATM-Adresse nicht verfügbar ist, wird eine Anfrage bei einem ATM-Server durchgeführt, wobei von dem ATM-Server als Antwort die ATM-Adresse übermittelt wird.

## Claims

1. Method for mapping a quality-of-service feature, which is available in a connection-orientated communication network and which identifies a high-priority or a low-priority data stream, into a connectionless communication network, and vice versa
a) wherein a first low-priority data stream from the connection-orientated communication network is mapped transparently into the connectionless communication network,
b) wherein a first high-priority data stream from the connection-orientated communication network is mapped transparently into the connectionless communication network,
c) wherein a second low-priority data stream from the connectionless communication network is mapped into the connection-orientated communication network, with an address of the connectionless communication network being converted into an address of the connection-orientated communication network,
d) wherein a second high-priority data stream from the connectionless communication network is mapped into the connection-orientated communication network by,
if the second high-priority data stream is a signalling packet, converting signalling information of the signalling packet from the connectionless communication network into signalling information available in the connection-orientated communication network, or,
if the second high-priority data stream is an information packet, by carrying out transparent transmission into the connection-orientated communication network.

2. Method according to Claim 1
wherein the quality-of-service parameters from the signalling packet which are available in the connectionless communication network are converted into the connection-orientated communication network in the following steps:
a) a suitable bandwidth for a new connection is determined from an available overall bandwidth;
b) the suitable address of the connection-orientated communication network is determined by means of an address conversion from the address of the connectionless communication network;
c) if a suitable bandwidth is available and the address is known in the connection-orientated communication network, the new connection will be set up;
d) if a suitable bandwidth is unavailable or if the address is not known in the connection-orientated communication network, a pre-definable error message will be shown.

3. Method according to one of the preceding Claims
wherein the connection-orientated communication network is an ATM network and the address of the connection-orientated communication network is an ATM address.

4. Method according to one of the preceding Claims
wherein the connectionless communication network is a Local Area Network (LAN) expanded to include the quality-of-service feature for being able to distinguish a high-priority from a low-priority data stream and the address of the connectionless communication network is a LAN address.

5. Method according to Claims 3 and 4
wherein address conversion is carried out in the following steps:
a) for the LAN address the ATM address is determined by a LAN server, or,
b) if the ATM address is not available locally, an inquiry is submitted to an ATM server, with the ATM server conveying the ATM address as the response.

## Revendications

1. Procédé permettant de reproduire, dans un réseau de communication sans connexion, une caractéristique de qualité de service disponible dans un réseau de communication orienté connexion et qui caractérise un flux de données à haute priorité ou un flux de données à faible priorité, et inversement,
a) dans lequel un premier flux de données à faible priorité provenant du réseau de communication orienté connexion est reproduit d'une façon transparente dans le réseau de communication sans connexion,
b) dans lequel un premier flux de données à haute priorité provenant du réseau de communication orienté connexion est reproduit d'une façon transparente dans le réseau de communication sans connexion,
c) dans lequel un deuxième flux de données à faible priorité provenant du réseau de communication sans connexion est reproduit dans le réseau de communication orienté connexion, une conversion d'adresse d'une adresse du réseau de communication sans connexion en une adresse du réseau de communication orienté connexion étant exécutée,
d) dans lequel un deuxième flux de données à haute priorité provenant du réseau de communication sans connexion est reproduit dans le réseau de communication orienté connexion
en procédant, dans le cas où le deuxième flux de données à haute priorité est un paquet de signalisation, à une conversion d'une information de signalisation du paquet de signalisation provenant du réseau de communication sans connexion en une information de signalisation disponible dans le réseau de communication orienté connexion,
en procédant, dans le cas où le deuxième flux de données à haute priorité est un paquet de signalisation, à une transmission transparente dans le réseau de communication orienté connexion.

2. Procédé selon la revendication 1
au cours duquel les paramètres de qualité de service, disponibles dans le réseau de communication sans connexion et provenant du paquet de signalisation, sont convertis dans le réseau de communication orienté connexion au cours des étapes suivantes:
a) à partir d'une largeur de bande totale disponible, on détermine une largeur de bande appropriée pour une nouvelle liaison;
b) à partir de l'adresse du réseau de communication sans connexion, on détermine, par une conversion d'adresse, l'adresse adéquate du réseau de communication orienté connexion;
c) si une largeur de bande appropriée est disponible et si l'adresse dans le réseau de communication orienté connexion est connue, la nouvelle liaison est établie;
d) si une largeur de bande appropriée n'est pas disponible ou si l'adresse dans le réseau de communication orienté connexion n'est pas connue, un message d'erreur, qui peut être déterminé au préalable, est représenté.

3. Procédé selon l'une des revendications précédentes
dans lequel le réseau de communication orienté connexion est un réseau MTA (ou, en anglais, ATM) et l'adresse du réseau de communication orienté connexion est une adresse MTA.

4. Procédé selon l'une des revendications précédentes
dans lequel le réseau de communication sans connexion est un réseau local (ou, en anglais, "Local Area Network" LAN), qui reçoit une extension constituée par une caractéristique de qualité de service permettant de faire une distinction entre un flux de données à haute priorité et un flux de données à faible priorité, et l'adresse du réseau de communication sans connexion est une adresse de LAN.

5. Procédé selon la revendication 3 et 4
dans lequel la conversion d'adresse est exécutée au cours des étapes suivantes:
a) pour l'adresse de LAN, un serveur de LAN détermine l'adresse MTA ou bien
b) si l'adresse de MTA n'est pas disponible localement, une interrogation est effectuée dans un serveur MTA, le serveur MTA transmettant comme réponse l'adresse MTA.
